# EUROPEAN PATENT APPLICATION

(11) **EP 4 571 503 A1**
(43) Date of publication of application: **18.06.2025**
(21) Application number: 23887413.5
(22) Date of filing: 22.05.2023
(51) Int. Cl.: G06F 9/451

(54) **APPLICATION INFORMATION PROCESSING METHOD, AND ELECTRONIC DEVICE AND STORAGE MEDIUM**

(30) Priority: 11.11.2022 CN 202211413875
(71) Applicant: ZTE CORPORATION, Shenzhen, Guangdong 518057 (CN)
(72) Inventor: ZHANG, Nan, Shenzhen, Guangdong 518057 (CN)
(74) Representative: Canzler & Bergmeier Patentanwälte Partnerschaft mbB
(86) International application number: PCT/CN2023/095549
(87) International publication number: WO 2024/098714

(57) **Abstract**

The present disclosure relates to the technical field of communications. Provided are an application information processing method, and an electronic device and a storage medium. The method comprises: determining a target time period on the basis of the current system time and historical usage information of at least one application; and screening usage record information of the at least one application according to the determined target time period, so as to obtain target information, wherein the target information is information generated within a historical time period that matches the target time period, and the usage record information is usage information of the at least one application within a plurality of time periods.

## Description

### CROSS REFERENCE TO RELATED APPLICATIONS

The present disclosure claims the priority to Chinese Patent Application No. 202211413875.5 entitled "METHOD FOR PROCESSING APPLICATION INFORMATION, ELECTRONIC DEVICE AND STORAGE MEDIUM" and filed on November 11, 2022, the contents of which are incorporated herein by reference in their entirety.

### TECHNICAL FIELD

The present disclosure relates to the field of data processing technology, and in particular, to a method for processing application information, an electronic device, and a storage medium.

### BACKGROUND

With rapid development of smart terminal technologies, a terminal can provide more and more functions, so as to meet different requirements of users. For example, the terminal may provide a user with service options for various functions on a negative screen. In general, a plurality of pieces of commonly used information and/or a plurality of commonly used applications are displayed on the negative screen, so as to allow the user to perform quick operations on the negative screen to acquire information or access a certain business service.

However, a traditional negative screen usually adopts a fixed mode for displaying, and cannot meet a real-time usage requirement of the user, which makes user experience poor.

### SUMMARY

The present disclosure provides an application information processing method, an electronic device, and a storage medium.

In one aspect, an embodiment of the present disclosure provides a method for processing application information, including: determining a target time period based on a current system time and historical usage information of at least one application; and screening usage record information of the at least one application according to the determined target time period to obtain target information, wherein the target information is information generated in a historical time period matched with the target time period, and the usage record information is usage information of the at least one application in a plurality of time periods.

In another aspect, an embodiment of the present disclosure provides an electronic device, including: one or more processors; and a storage device having stored thereon one or more programs which, when executed by the one or more processors, cause the one or more processors to implement the method for processing application information according to the embodiments of the present disclosure.

In still another aspect, an embodiment of the present disclosure provides a readable storage medium storing a computer program which, when executed by a processor, implements the method for processing application information according to the embodiments of the present disclosure.

The above embodiments and other aspects of the present disclosure and the implementations thereof will be described more in the Drawings, the Detailed Description, and the Claims.

### BRIEF DESCRIPTION OF DRAWINGS

FIG. 1 is a flowchart illustrating a method for processing application information according to an embodiment of the present disclosure.
FIG. 2 is a flowchart illustrating a method for processing application information according to another embodiment of the present disclosure.
FIG. 3 is a schematic diagram illustrating displaying of a target screen according to an embodiment of the present disclosure.
FIG. 4 is a schematic diagram illustrating displaying of a target screen according to another embodiment of the present disclosure.
FIG. 5 is a block diagram of an apparatus for processing application information according to an embodiment of the present disclosure.
FIG. 6 is a schematic structural diagram illustrating an exemplary hardware architecture of a computing device capable of implementing method and apparatus for processing application information according to the embodiments of the present disclosure.

### DETAIL DESCRIPTION OF EMBODIMENTS

In order to make objectives, technical solutions and advantages of the present disclosure clearer, embodiments of the present disclosure are described in detail below in conjunction with the drawings. It should be noted that the embodiments herein and features therein can be combined with one another if no conflict is incurred.

A traditional negative screen usually adopts a fixed mode for displaying contents, and when a user manually triggers the negative screen, the displayed contents are relatively fixed, such that the traditional negative screen cannot dynamically meet a real-time usage requirement of the user according to the real-time usage requirement of the user, which makes user experience poor.

The present disclosure provides method and apparatus for processing application information, an electronic device, and a storage medium for solving the above technical problem.

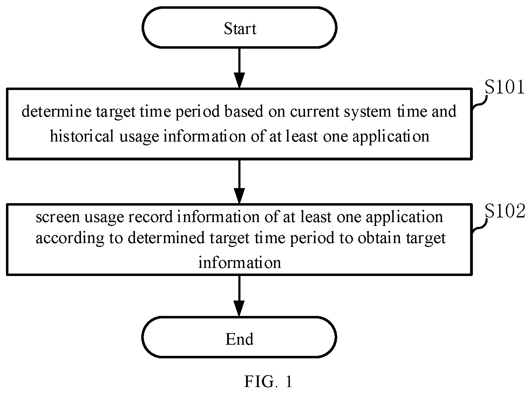

FIG. 1 is a flowchart illustrating a method for processing application information according to an embodiment of the present disclosure. The method is applicable to an apparatus for processing application information. As shown in FIG. 1, the method for processing application information according to the embodiment of the present disclosure includes, but is not limited to, the following operations S101 and S102.

At operation S101, a target time period is determined based on a current system time and historical usage information of at least one application.

Historical usage information of the application is information about usages of the application in different historical time periods (e.g., a time period during 8 a.m. on a first day or a time period during 8 a.m. on a second day), and is configured to represent information (e.g., a type of the application, an identification of the application and the like) of the application used in the different historical time periods. For example, the historical usage information of the application is historical usage information of all applications installed on a terminal (or part of the applications installed on the terminal).

The historical usage information of the application is matched with the current system time to estimate usage duration corresponding to information of a target application which needs to be used by a user in a certain time period after the current system time, thereby determining the target time period corresponding to the target application. There may be one target application or a plurality of target applications.

For example, it is known from the acquired historical usage information of the application that a certain user usually uses a certain shopping application within half an hour after the current system time, then a usage time period corresponding to the shopping application may be taken as the target time period.

For another example, the user may also use a certain payment application within half an hour after the current system time, comprehensive evaluation is performed based on usage time periods corresponding to the payment application and the shopping application to determine the target time period, so as to allow the user to acquire desired information during the target time period.

At operation S102, usage record information of the at least one application is screened according to the determined target time period to obtain target information.

The target information is information generated in a historical time period matched with the target time period, and the usage record information is usage information of the at least one application in a plurality of time periods. For example, an identification of an application corresponding to the target time period in the usage record information is taken as the target information corresponding to the target time period, so as to facilitate processing of different applications to meet a real-time usage requirement of the user.

For example, the target information corresponding to the target time period may be information that the user most desires to acquire in the target time period, such as information of a certain application and information or news that the user is interested in. The above examples of the target information are merely for illustration, the target information may be set according to actual needs, and other examples of the target information that are not described here also fall within the protection scope of the present disclosure, and will not be described in detail here.

It should be noted that, in a case where the target time period is a time period determined based on the historical usage information of a specific application and the current system time, usage record information of the specific application needs to be screened; and in a case where the target time period is a time period determined based on historical usage information of a plurality of applications and the current system time, usage record information of the plurality of applications (i.e., each application at operation S102) needs to be respectively screened, so as to make the obtained target information more accurate.

In the present embodiment, by determining the target time period based on the current system time and the historical usage information of the at least one application, the target time period can be accurately obtained, so as to facilitate processing of information in the target time period; and by screening the usage record information of the at least one application according to the determined target time period to obtain the target information, which is the information generated in the historical time period matched with the target time period, dynamic adaption to the usage requirement of the user in different time periods can be realized, and user experience can be improved.

In some alternative embodiments, the usage record information includes: a plurality of preset time periods and a mapping relationship between the preset time periods and usage information of a preset application.

The preset application is an application used in the preset time periods. For example, information of applications used by the user in different time periods is determined based on an Artificial Intelligence (AI) algorithm. The usage record information may include one preset application or a plurality of preset applications, and the one preset application may correspond to the plurality of preset time periods, or each of the plurality of preset applications may correspond to the plurality of preset time periods, respectively.

The preset time periods are time periods determined based on preset time interval information which is a time interval set in advance, such as 15 minutes, 1 hour, one day or one week, so as to accurately position the current system time.

For example, the read current system time is 9:10 which belongs to a time period of 9:00-9:15, then the time period of 9:00-9:15 may be taken as the target time period, and user operations corresponding to the target time period are processed, thereby achieving accurate time matching.

The usage information of the preset application includes at least one of an identification of the preset application, usage duration of the preset application, or usage frequency information of the preset application.

For example, according to usage habits of different users, the apparatus for processing application information can intelligently recommend functional applications which need to be used by the user to the user in each time period during a day. The user can check the functional applications which need to be used by sliding a screen up and down. The usage habit of the user may include time point information of using the preset application, usage duration information of the preset application, and a number of using times of the preset application, and the above information may be recorded in the usage record information of the application. Moreover, when the user uses different applications installed in the terminal including the apparatus for processing application information, the usage record information of the application may be updated in real time.

For example, 24 hours of a day may be evenly divided into 96 time periods each corresponding to 15 minutes. Each time period may be taken as the minimum time period unit for recognizing or recommending applications in the AI algorithm. For example, it is recognized based on the AI algorithm that the user is on the way to work in a time period corresponding to 8:45-9:00, and arrives at the company in a time period corresponding to 9:00-9:15. Similarly, application scenes corresponding to other different time periods may be also determined, so as to obtain different application scenes corresponding to 24 hours of a day.

It should be noted that a display region for a target screen is limited, and consecutive time periods corresponding to a certain application scene may be considered and displayed as a whole, for example, 8:45-9:15 is defined as a time period of being on the way to work, so that a plurality of consecutive time periods corresponding to a same application scene may be combined, and sorting is performed based on the combined time periods, so as to achieve screening and simplification of the different time periods.

In some alternative embodiments, the operation S102 of screening the usage record information of the at least one application according to the determined target time period to obtain the target information may be implemented by taking the information generated in the historical time period matched with the target time period in the usage record information of the at least one application as primary selection information, and screening the primary selection information based on usage frequency information of each application to obtain the target information.

With the target time period used as an index, the usage record information of the application is searched to obtain the information (e.g., usage duration of a plurality of applications, types of the applications, and numbers of using times of the applications) generated in the historical time period matched with the target time period.

It should be noted that, when the usage record information of the application is searched by the apparatus for processing application information, the apparatus for processing application information needs to perform matching on each time period in the usage record information of the application and the target time period to determine which time period is the same as the target time period, so as to extract the primary selection information corresponding to the target time period, thereby ensuring accuracy in terms of time dimension.

Then, the apparatus for processing application information screens the primary selection information based on the usage frequency information of each application (for example, according to numbers of using times of different applications in a unit of time, a plurality of applications in the primary selection information are sorted in a descending order of the numbers of using times, so that the user can easily access favorite and frequently used applications) to obtain the target information, so that the target information can be better meet the usage requirement of the user, and the user experience can be improved.

In some alternative embodiments, after the operation S102 of screening the usage record information of the at least one application according to the determined target time period to obtain the target information, the method further includes at least one of the following operations: storing the target time period and the corresponding target information; displaying the target time period and the corresponding target information on the target screen; or sending the target time period and the corresponding target information to a preset device.

The target time period and the corresponding target information may be stored in a preset storage space (such as a device memory or a device cache), so that the target information corresponding to the target time period can be acquired in time when the apparatus for processing application information is triggered to start, so as to increase an information processing speed. Moreover, using conditions of the applications by the user in different time periods can be effectively perceived through the storage of the target time period and the corresponding target information, so as to facilitate subsequent matching with the usage habits of the user.

For example, after obtaining the target time period and the corresponding target information, the above information may be directly displayed on the target screen (e.g., a negative screen or a pull-down menu), so as to allow the user to check in time.

For example, after obtaining the target time period and the corresponding target information, the target time period and the corresponding target information may be stored first, and the stored target time period and the stored corresponding target information may be then displayed on the target screen.

Sending the target time period and the corresponding target information to the preset device may output the target time period and the corresponding target information to another device in communication connection with a terminal used by the user (for example, a display screen in communication connection with the terminal, or an audio device for outputting to the user in a form of sound in communication connection with the terminal) when the terminal is in a lock screen status, so that the user can acquire the desired information in time, and the efficiency of acquiring information by the user can be improved.

In some alternative embodiments, after displaying the target time period and the corresponding target information on the target screen, the method further includes: in a case where a triggered preset task event is detected, updating the target information on the target screen according to a processing time corresponding to the preset task event.

The preset task event may be an event triggered by an external device or an event triggered by the system automatically at a scheduled time. The external device may be a server corresponding to a certain application or a network element device of a different type connected to the apparatus for processing application information. The triggered preset task event includes: a schedule establishment task triggered by a user, a reminder task of express delivery sent by a server, etc.

It should be noted that different preset task events may be processed with different processing manners. For example, for the schedule establishment task, a reminder time may be set; and for a task of receiving or sending an object by express delivery, a reminder time or a time for the reception or the sending may be set. Thus, the different preset task events can be processed.

Updating the target information on the target screen may include: reading a reminder time or an execution time corresponding to the preset task event; and performing matching on timeline information currently displayed on the target screen according to the read reminder time or the read execution time, and updating the target information displayed on the target screen if it is determined that the reminder time or the execution time is matched with the currently displayed timeline information (for example, the reminder time is 16:15, and the currently displayed timeline information is 16:00-16:30, then it can be determined that the reminder time is matched with the currently displayed timeline information), so as to allow the preset task event triggered by the external device to be known and processed by the user in time.

In some alternative embodiments, the target information includes applications to be displayed and display modes; and the display modes include: a first display mode and a second display mode.

Displaying the target time period and the corresponding target information on the target screen includes: determining the first display mode of the target time period in a first display region of the target screen, and displaying the target time period on the target screen in the first display mode; and determining the second display mode of the applications to be displayed in a second display region of the target screen, and displaying the applications to be displayed on the target screen in the second display mode.

The first display mode may include a display position and a display form of the target time period in the first display region. For example, the target time period is displayed in a 24-hour display format (e.g., 16:45 or 13:15) on an upper part of the first display region, so as to allow the user to check the time information.

The second display mode includes at least one of displaying icons of the applications to be displayed in different preset sizes based on display priority levels of the applications to be displayed, or displaying function information of the applications to be displayed in a form of a preset card.

The preset card includes: a customized card owned by the target screen or a widget adapted to the target screen. The widget may be understood as "an application widget", i.e., a tool for being made and freely downloaded by the user, which may include a display widget that integrates multiple functions such as entertainment, work, and learning.

The preset sizes are display sizes of the icons of the applications to be displayed on the target screen. For example, an icon of an application to be displayed with the highest display priority level may be displayed in a form of a large icon with a size of 2*2 at an uppermost position in the target screen; an icon of an application to be displayed with a lower display priority level may be displayed in a form of a medium icon with a size of 2*1; and an icon of an application to be displayed with the lowest display priority level may be displayed in a form of a small icon with a size of 1*1.

By displaying the applications to be displayed in different manners in the second display region of the target screen, the user can visually access different applications, and can easily process the applications with the different priority levels in different ways, which can improve the user experience.

In some alternative embodiments, before displaying the target time period and the corresponding target information on the target screen, the method further includes: in a case where it is determined that the applications to be displayed include a first-type application and a second-type application, acquiring a display priority level of the first-type application and a display priority level of the second-type application; and according to a preset display number, the target time period, the display priority level of the first-type application, and the display priority level of the second-type application, performing content arrangement on the target screen to obtain content arrangement information.

The first-type application is an application corresponding to a time period before the target time period, the second-type application is an application corresponding to the target time period, and the display priority level of the first-type application is lower than that of the second-type application.

It should be noted that the first-type application may coincide with the second-type application because the applications used by the user in different time periods may be the same (for example, the user uses a certain application for 1-2 hours) or may be different (for example, the user uses the first-type application for 15 minutes in the time period before the target time period and uses the second-type application for 10 minutes in the target time period). Therefore, based on the display priority levels of different applications, it may be comprehensively evaluated whether each application needs to be displayed on the target screen, thereby obtaining the content arrangement information.

The content arrangement information includes at least one of identifications of the applications to be displayed, usage time periods corresponding to the applications to be displayed, and display manners of the applications to be displayed in the target screen.

The content arrangement information is represented through information in different dimensions, so that the applications can be displayed on the target screen in different display manners based on the content arrangement information, which can improve intuitive feelings of the applications of the user, enable the user to acquire the applications that the user most desire to access, and improve the user experience.

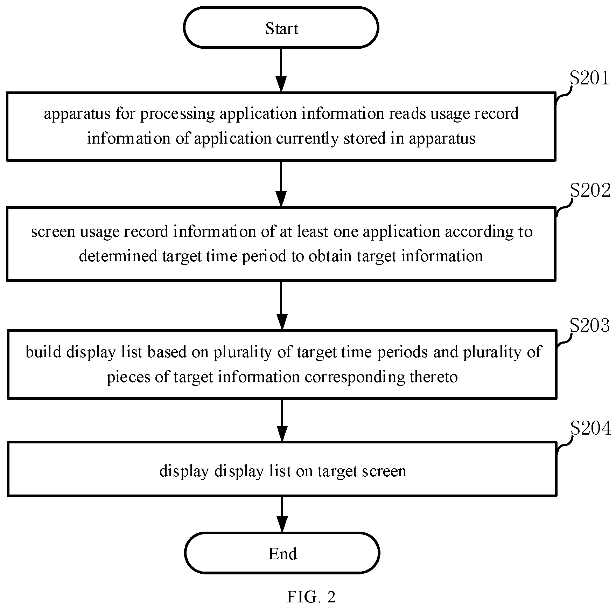

FIG. 2 is a flowchart illustrating a method for processing application information according to another embodiment of the present disclosure. The method is applicable to an apparatus for processing application information. As shown in FIG. 2, the method for processing application information according to the embodiment of the present disclosure includes, but is not limited to, the following operations S201 to S204.

At operation S201, the apparatus for processing application information reads usage record information of applications currently stored in the apparatus.

The usage record information of the applications may be represented in a form of a comparison table of the applications and an usage time thereof or in a form of a database including different applications, attribute information of the applications, and usage durations of the applications. The above examples of the representation form corresponding to the usage record information of the applications are merely for illustration, the representation form corresponding to the usage record information of the applications may be set according to actual situations, and other representation forms that are not described here also fall within the protection scope of the present disclosure, and will not be described in detail here.

At operation S202, the usage record information of at least one application is screened according to the determined target time period to obtain the target information.

The target time period is the period determined based on the current system time and the historical usage information of the at least one application, the target information is the information generated in the historical time period matched with the target time period, and the usage record information of the application includes information of the application used in the plurality of time periods. The target time period may include the plurality of time periods, so that a plurality of pieces of target information may be obtained.

In some alternative embodiments, when it is detected that the target screen is opened for displaying, the current system time is read; the target time period, i.e., a target time point or the target time period to be displayed on the target screen, is determined according to preset time interval information and the current system time; primary screening is performed on the usage record information of the application based on the target time period (for example, information with a time closest to the current system time is selected) to obtain the primary selection information; and the primary selection information is screened based on the usage frequency information of the application (for example, information with the highest usage frequency is selected) to obtain the target information.

At operation S203, a display list is built based on a plurality of target time periods and a plurality of pieces of target information corresponding thereto.

In some alternative embodiments, a number of time periods which need to be preferentially displayed on the target screen among the plurality of target time periods is determined first, and interface arrangement is performed on the target information corresponding to each of the time periods that need to be preferentially displayed on the target screen, so as to obtain the display list.

For example, the plurality of target time periods may be displayed in the first display region of the target screen, and the target information corresponding to each of the target time periods may be displayed in the second display region of the target screen. Further, display positions of different applications in the target information may be adjusted according to priority levels of the different applications, so as to adapt to the actual usage requirement of the user.

At operation S204, the display list is displayed on the target screen.

The display list may be stored or cached first, and then displayed on the target screen when triggered by the user.

In some alternative embodiments, the display operation at operation S204 may be displaying the display list on the target screen when a triggered preset open operation (e.g., a screen slide operation triggered by the user or a reminder operation started by the system at a scheduled time) instruction is detected, so as to meet a usage requirement of the user on the display list when the user starts some operation instructions.

In some alternative embodiments, after operation S204 is executed, whether the preset task event triggered by the external device is received needs to be detected (for example, the schedule establishment event (for example, a real-time travel event or a travel plan event at a preset moment) triggered by the user or the reminder information for checking express delivery is detected). In a case where it is detected that the preset task event triggered by the external device is received, the target information on the target screen is updated according to the processing time (e.g., the reminder time for checking express delivery or the time for executing a preset schedule task) corresponding to the preset task event.

For example, the processing time corresponding to the preset task event is input into the AI algorithm for processing, so as to obtain target information (e.g., an identification of an express query application corresponding to the reminder time for checking express delivery) output by the AI algorithm and matched with the processing time corresponding to the preset task event, and the processing time corresponding to the preset task event and the matched target information are displayed on the target screen; or, in a case where it is determined that a target time period corresponding to the processing time is not found in the target screen, a new time period is established based on the processing time corresponding to the preset task event and the matched target information, and is inserted into the display region of the target screen which displays information in real time. Thus, repeated displaying of the time information and the target information on the target screen can be avoided, and the displayed information can be simplified.

For example, the target screen is a streaming screen which merely displays an all-day scene at the top and time periods after a time moment of sliding to open the streaming screen. Therefore, at the time moment of sliding to open the streaming screen, information of an application which is used most frequently by the user in the target time period corresponding to the time moment and is most close to the time moment needs to be displayed as the target information; further, the target information corresponding to the time moment may be displayed at the most visible position in the streaming screen, and the target information corresponding to the other time periods is sequentially displayed below.

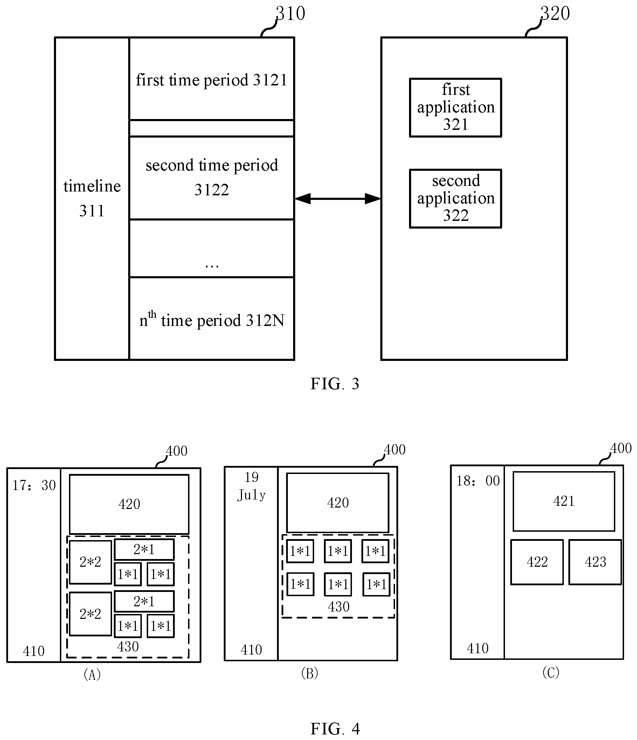

FIG. 3 is a schematic diagram illustrating displaying of a target screen according to an embodiment of the present disclosure. As shown in FIG. 3, a plurality of interfaces, such as a target interface 310 or a desktop display interface 320 of a terminal, are displayed in the target screen, and switching between the different interfaces, such as the target interface 310 and the desktop display interface 320 of the terminal, may be realized by sliding left and right.

The target interface 310 includes two regions, i.e., a region where a timeline 311 is located and a display region corresponding to different time periods (e.g., a first time period 3121, a second time period 3122 ... an n^{th} time period 312N, with N denoting a number of the time periods and N being an integer greater than or equal to 1). The desktop display interface 320 of the terminal includes icons of a plurality of applications, such as a first application 321 and a second application 322.

It should be noted that the different time periods correspond to different display contents. For example, the display content corresponding to the first time period 3121 (e.g., 8:45-9:15) is applications used on the way to work in the morning; and the display content corresponding to the second time period 3122 (e.g., 9:15-11:30) is applications used at work in the morning.

For example, a left side of the target interface may be used as a timeline display region (i.e., the region where the timeline 311 is located) in which a time duration, a start time, and an end time of each target time period are displayed; and a right side of the target interface may be used as a content region (i.e., a region where the target information is displayed), and the target information (e.g., icons of applications recommended to the user) corresponding to the target time period is displayed in the content region.

Before the above information is displayed in the target screen, content arrangement may be performed on the target screen according to a preset display number, the target time period, and the display priority levels of different types of applications, so as to obtain the content arrangement information.

For example, the content arrangement may be performed on the target screen in the following way to obtain the content arrangement information: 1) if update information about express delivery exists at the current system time, displaying tracking information about express delivery in advance in the target time period corresponding to the current system time; 2) if update information such as schedule reminder information, travel information or "SHIGUANG Story" is detected, displaying the above information in advance in the target time period corresponding to each update information; 3) if it is determined that there is no target time period matched with the update information, creating a new target time period in the target screen based on the target time period corresponding to the update information; and 4) if it is determined that preset information needs to be displayed in a specified application scene, displaying the preset information in advance (such as displaying sports and health information in a sports scene or displaying micro-blog information or hot list information in an entertainment scene).

A display manner for the displaying of the target information in the target screen includes: displaying the icons of the applications to be displayed in different preset sizes based on the display priority levels of the applications to be displayed, and/or displaying the function information of the applications to be displayed in the form of the preset card.

For example, in a case where it is determined that an application to be displayed needs to be displayed in a form of a customized card, the application to be displayed is displayed in a form of the customized card owned by the target screen or in a form of the widget adapted to the target screen.

In a case where it is determined that there are no customized card for the applications to be displayed, the icons of the applications to be displayed are displayed in different preset sizes based on the display priority levels of the applications to be displayed. For example, up to two groups of icons may be displayed in the target screen, and each group of icons includes four icons (the preset sizes different in number are included, e.g., the large icon with the size of 2*2, the medium icon with the size of 2*1, or the small icon with the size of 1*1).

The icon of the application to be displayed with the highest display priority level may be displayed in a form of the large icon with the size of 2*2 at an uppermost position in the target screen; the icon of the application to be displayed with the lower display priority level may be displayed in a form of the medium icon with the size of 2*1; and the icon of the application to be displayed with the lowest display priority level may be displayed in a form of the small icon with the size of 1*1.

For example, FIG. 4 is a schematic diagram illustrating displaying of a target screen according to still another embodiment of the present disclosure. A target screen 400 may include a plurality of different display manners. As shown in FIG. 4 (A), the target screen 400 may include: a timeline 410 (for example, a displayed time is 15:25); an application 420 displayed in the form of the customized card; and a display region 430 including icons of applications displayed in a plurality of different sizes (e.g., two large icons with the size of 2*2, two medium icons with the size of 2*1, and four small icons with the size of 1*1).

As shown in FIG. 4 (B), the target screen 400 may include: a timeline 410 (for example, a displayed date is 19 July); an application 420 displayed in the form of the customized card; and a display region 430 including icons of applications displayed in a plurality of different sizes (e.g., six small icons with the size of 1*1).

As shown in FIG. 4 (C), the target screen 400 may include: a timeline 410 (for example, a displayed time is 17:30, and the time may be displayed by taking half-hour as a time interval); an application 421 displayed in the form of the customized card; and a first application display region 422 and a second application display region 423 which are displayed in the form of the widget.

It should be noted that the above examples of the display manners of the target screen are merely for illustration, the display manners of the target screen may be set according to actual situations (e.g., a size of the target screen, a number of applications capable of being displayed, and a number of customized cards), and other display manners of the target screen that are not described here also fall within the protection scope of the present disclosure, and will not be described in detail here.

The user can switch between the different display manners by sliding up and down (for example, initial display contents of the target screen are information of applications corresponding to the current half hour (e.g., a time period of 17:30-18:00); by sliding up, information of applications corresponding to the current day may be displayed; and by sliding down, information of applications to be displayed in a certain small time period (e.g., a time period of 18:00-18:30) in the future may be displayed. In this way, when the user open the target screen in different time periods, information of applications needed by the user can be displayed in real time according to the usage requirement of the user, which can improve the user experience.

In the embodiments of the present disclosure, by reading the usage record information of the application currently stored in the device with the apparatus for processing application information and screening the usage record information of the application based on the target time period, the target information corresponding to the target time period can be obtained; by determining the target information to be displayed in the target time period, dynamic adaption to the usage requirement of the user in different time periods can be realized; by building the display list based on the plurality of target time periods and the plurality of pieces of target information corresponding thereto, the time periods and the information which need to be displayed on the target screen and the corresponding display formats can be determined; by displaying the display list on the target screen, the user can obtain the information of the applications desired to be used at each moment of sliding to open the target screen, and can obtain corresponding functions needed for a whole day by sliding the screen up and down. Thus, the user experience is improved.

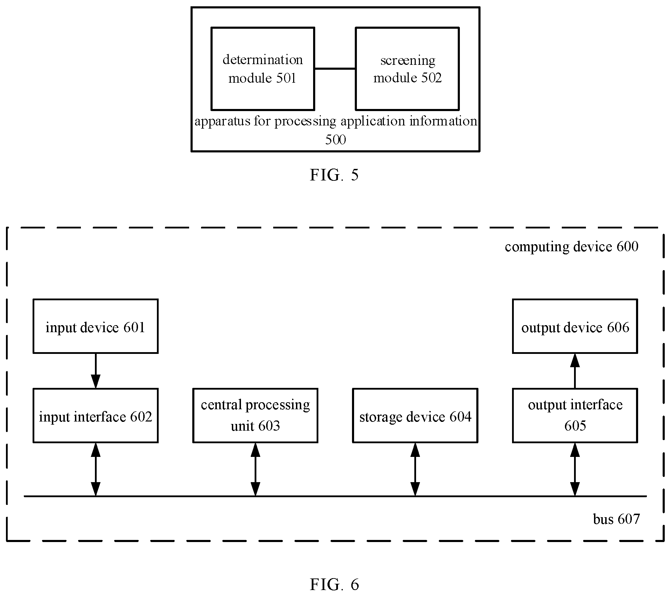

FIG. 5 is a block diagram of an apparatus for processing application information according to an embodiment of the present disclosure. As shown in FIG. 5, an apparatus for processing application information 500 includes, but is not limited to, a determination module 501 and a screening module 502.

The determination module 501 is configured to determine a target time period based on a current system time and historical usage information of at least one application.

The screening module 502 is configured to screen usage record information of the at least one application according to the determined target time period to obtain target information, the target information is information generated in a historical time period matched with the target time period, and the usage record information is usage information of the at least one application in a plurality of time periods.

It should be noted that the apparatus for processing application information 500 in the present embodiment can implement the application information processing method described in any embodiment of the present disclosure.

According to the apparatus provided in the embodiment of the disclosure, by determining the target time period based on the current system time and the historical usage information of the at least one application with the determination module, the target time period can be accurately obtained, so as to facilitate processing of the information in the target time period; and by screening the usage record information of the at least one application according to the determined target time period with the screening module to obtain the target information, which is the information generated in the historical time period matched with the target time period, dynamic adaption to the usage requirement of the user in the different time periods can be realized, and the user experience can be improved.

It should be noted that the present disclosure is not limited to the specific configurations and processing described in the above embodiments and illustrated by the drawings. For convenience and simplicity of description, a detailed description of known methods is omitted herein, reference may be made to corresponding processes in the above method embodiments for operation processes of the systems, modules and units described above, and those operation processes will not be described in detail here.

FIG. 6 is a schematic structural diagram illustrating an exemplary hardware architecture of a computing device capable of implementing method and apparatus for processing application information according to the embodiments of the present disclosure.

As shown in FIG. 6, a computing device 600 includes an input device 601, an input interface 602, a central processing unit 603, a storage device 604, an output interface 605, and an output device 606. The input interface 602, the central processing unit 603, the storage device 604, and the output interface 605 are connected to each other through a bus 607, and the input device 601 and the output device 606 are connected to the bus 607 through the input interface 602 and the output interface 605 respectively, so as to be further connected to other components of the computing device 600.

The input device 601 receives input information from the outside, and transmits the input information to the central processing unit 603 via the input interface 602; the central processing unit 603 processes the input information based on computer-executable instructions stored in the storage device 604 to generate output information, temporarily or permanently stores the output information in the storage device 604, and then transmits the output information to the output device 606 via the output interface 605; and the output device 606 outputs the output information out of the computing device 600 for being used by users.

In some embodiments, the computing device shown in FIG. 6 may be implemented as an electronic device, which may include: a storage device configured to store a program; and a processor configured to run the program stored in the storage device to perform the application information processing method described in the above embodiments.

In some embodiments, the computing device shown in FIG. 6 may be implemented as an application information processing system, which may include: a storage device configured to store a program; and a processor configured to run the program stored in the storage device to perform the application information processing method described in the above embodiments.

The above description is merely of the exemplary embodiments of the present disclosure, and is not intended to limit the scope of the present disclosure. In general, the various embodiments of the present disclosure may be implemented by hardware or special circuits, software, logic or any combination thereof. For example, some aspects of the present disclosure may be implemented by hardware and other aspects may be implemented by firmware or software executable by a controller, a microprocessor or other computing devices, but the present disclosure is not limited thereto.

The embodiments of the present disclosure may be implemented by a processor of a mobile device executing computer program instructions. For example, the embodiments of the present disclosure are implemented in a processor entity, or by hardware, or by a combination of software and hardware. The computer program instructions may be assembly instructions, Instruction Set Architecture (ISA) instructions, machine instructions, machine-related instructions, microcode, firmware instructions, state setting data, or source code or object code written in one programming language or in any combination of a plurality of programming languages.

A block diagram illustrating any logic flow in the drawings of the present disclosure may show operations of a program, or interconnected logic circuits, modules and functions, or a combination of the operations of the program and the logic circuits, modules and functions. The computer program can be stored on a memory. The memory may be of any type suitable to local technical environment and may be implemented using any suitable data storage technology. For example, the memory is, but not limited to, a Read-Only Memory (ROM), a Random Access Memory (RAM), and an optical storage device and system (a Digital Video Disc (DVD) or a Compact Disc (CD)). A computer-readable medium may include a non-transitory storage medium. The processor may be of any type suitable to the local technical environment. For example, the data processor is, but not limited to, a general-purpose computer, a special purpose computer, a microprocessor, a Digital Signal Processors (DSP), an Application Specific Integrated Circuit (ASIC), a Field Programmable Gate Array (FGPA), and a processor based on multi-core architecture.

According to the application information processing method, the electronic device, and the storage medium provided in the embodiments of the disclosure, by determining the target time period based on the current system time and the historical usage information of the at least one application, the target time period can be accurately obtained, so as to facilitate processing of the information in the target time period; and by screening the usage record information of the at least one application according to the determined target time period to obtain the target information, with the target information being the information generated in the historical time period matched with the target time period and the usage record information being the usage information of the at least one application in the plurality of time periods, dynamic adaption to the usage requirements of the users in the different time periods can be realized, and the user experience can be improved.

The exemplary embodiments of the present disclosure are illustrated in detail above by exemplary and non-limiting examples. For those of ordinary skill in the art, various modifications and adjustments to the above embodiments can be obviously derived from the accompanying drawings and the appended claims, but those modifications and adjustments are not beyond the scope of the present disclosure. Therefore, the proper scope of the present disclosure is defined by the appended claims.

## Claims

1. A method for processing application information, comprising:
determining a target time period based on a current system time and historical usage information of at least one application; and
screening usage record information of the at least one application according to the determined target time period to obtain target information, wherein the target information is information generated in a historical time period matched with the target time period, and the usage record information is usage information of the at least one application in a plurality of time periods.

2. The method of claim 1, wherein screening the usage record information of the at least one application according to the determined target time period to obtain the target information comprises:
taking the information generated in the historical time period matched with the target time period in the usage record information of the at least one application as primary selection information; and
screening the primary selection information based on usage frequency information of each of the at least one application to obtain the target information.

3. The method of claim 1, wherein after screening the usage record information of the at least one application according to the determined target time period to obtain the target information, the method further comprises at least one of:
storing the target time period and the target information corresponding to the target time period;
displaying the target time period and the target information corresponding to the target time period on a target screen; or
sending the target time period and the target information corresponding to the target time period to a preset device.

4. The method of claim 3, wherein after displaying the target time period and the target information corresponding to the target time period on the target screen, the method further comprises:
in a case where a triggered preset task event is detected, updating the target information on the target screen according to a processing time corresponding to the preset task event.

5. The method of claim 3, wherein the target information comprises applications to be displayed and display modes; and the display modes comprise: a first display mode and a second display mode, and
displaying the target time period and the target information corresponding to the target time period on the target screen comprises:
determining the first display mode of the target time period in a first display region of the target screen, and displaying the target time period on the target screen in the first display mode; and
determining the second display mode of the applications to be displayed in a second display region of the target screen, and displaying the applications to be displayed on the target screen in the second display mode.

6. The method of claim 5, wherein the second display mode comprises at least one of:
displaying icons of the applications to be displayed in different preset sizes based on display priority levels of the applications to be displayed, or
displaying function information of the applications to be displayed in a form of a preset card.

7. The method of claim 5, wherein before displaying the target time period and the target information corresponding to the target time period on the target screen, the method further comprises:
in a case where it is determined that the applications to be displayed comprise a first-type application and a second-type application, acquiring a display priority level of the first-type application and a display priority level of the second-type application, wherein the first-type application is an application corresponding to a time period before the target time period, the second-type application is an application corresponding to the target time period, and the display priority level of the first-type application is lower than the display priority level of the second-type application; and
according to a preset display number, the target time period, the display priority level of the first-type application, and the display priority level of the second-type application, performing content arrangement on the target screen to obtain content arrangement information.

8. The method of claim 7, wherein the content arrangement information comprises at least one of identifications of the applications to be displayed, usage time periods corresponding to the applications to be displayed, and display modes of the applications to be displayed in the target screen.

9. The method of any one of claims 1 to 8, wherein the usage record information comprises: a plurality of preset time periods and a mapping relationship between the preset time periods and usage information of a preset application, and
the preset application is an application used in the preset time periods, the preset time periods are time periods determined based on preset time interval information, and the usage information of the preset application comprises at least one of an identification of the preset application, usage duration of the preset application, or usage frequency information of the preset application.

10. An electronic device, comprising:
one or more processors; and
a storage device having stored thereon one or more programs which, when executed by the one or more processors, cause the one or more processors to implement the method for processing application information of any one of claims 1 to 9.

11. A readable storage medium, wherein the readable storage medium stores a computer program which, when executed by a processor, implements the method for processing application information of any one of claims 1 to 9.
